# EUROPÄISCHE PATENTSCHRIFT

(11) **EP 1 098 862 B1**
(45) Veröffentlichungstag und Bekanntmachung des Hinweises auf die Patenterteilung: **03.09.2003**
(21) Anmeldenummer: 99940064.1
(22) Anmeldetag: 27.07.1999
(51) Int. Cl.: C04B 41/48, C08G 18/08, E01C 13/00

(54) **VERWENDUNG VON WÄSSRIGEN POLYURETHAN-DISPERSIONEN IN FORMULIERUNGEN FÜR SPORTBODENBELÄGE**
USE OF AQUEOUS POLYURETHANE DISPERSIONS IN FORMULATIONS FOR SPORTS FLOOR COVERINGS
UTILISATION DE DISPERSIONS POLYURETHANNE AQUEUSES DANS DES FORMULATIONS DE REVETEMENT DE SOLS DESTINES AU SPORT

(30) Priorität: 28.07.1998 DE 19833819
(43) Veröffentlichungstag der Anmeldung: 16.05.2001
(73) Patentinhaber: Conica Technik AG, 8207 Schaffhausen (CH); Degussa Construction Chemicals GmbH, 83308 Trostberg (DE)
(72) Erfinder: TEMME, Werner, D-78244 Bietingen (DE); BERGS, Ralph, D-78244 Gottmadingen (DE); HÄBERLE, Hans, D-78244 Gottmadingen (DE); MAIER, Alois, D-84549 Engelsberg (DE)
(74) Vertreter: HOFFMANN - EITLE
(86) Internationale Anmeldenummer: EP9905384
(87) Internationale Veröffentlichungsnummer: WO00006521

(56) Entgegenhaltungen:
- DE-A- 2 623 534
- DE-A- 3 534 165
- US-A- 5 137 967

## Beschreibung

Die vorliegende Erfindung betrifft die Verwendung von wäßrigen Polyurethan-Dispersionen in Formulierungen für Sportbodenbeläge.

Gemäß dem Stand der Technik werden üblicherweise Polyurethan-Flüssigkunststoffe zur Herstellung von Leichtathletiklaufbahnen, Schulsportanlagen, Mehrzwecksportbelägen, Tennis- oder Ballspielanlagen, Elastikschichten unter Kunstrasen, Spielplätzen, Gehwegen, Kleinspielflächen, Sporthallen, Leichtathletikhallen und Mehrzwecksporthallen eingesetzt. Je nach Anforderungen können wasserdurchlässige oder wasserundurchlässige Beläge konstruiert werden.

Polyurethanbasierende Sportbodenbeläge für den Außen- und Innenbereich können auf verschiedenen Untergründen wie Asphalt, zementgebundenen Untergründen, Holz und Holzestrich hergestellt werden. Im einzelnen handelt es sich um Belagsaufbauten bestehend aus Polyurethanprepolymeren mit freien Isocyanatgruppen, die entweder einkomponentig feuchtigkeitshärtend oder zweikomponentig mit einer auf Polyol und/oder Amin basierenden Formulierung in einem definierten Mischungsverhältnis aushärten.

Im einzelnen handelt es sich hierbei um folgende nachfolgend näher beschriebene Produkte, die in den Formulierungen für Sportbodenbeläge zum Einsatz kommen:
1) Bindemittel für Elastikschichten
2) Haftvermittler und Grundierungen
3) Spritzbeschichtungen
4) Verlaufsbeschichtungen
5) Spachtelmassen
6) Klebstoffe
7) Versiegelungen

### 1) Bindemittel für Elastikschichten

Es handelt sich in der Regel um Polyurethanprepolymere aus höherfunktionellen Polyalkoholen (z. B. Polyether und/oder Polyesteralkohole) und höherfunktionellen Isocyanaten (z. B. MDI, TDI, IPDI, HDI). Sie sind i. a. feuchtigkeitshärtend, d. h. sie härten mit Luftfeuchtigkeit unter Ausbildung von Harnstoffbrücken zu mehr oder weniger elastischen Filmen aus. Bei der Herstellung von Sportbodenbelägen sind vor allem Bindemittel zur Bindung von Gummigranulaten von Interesse. Für Basisschichten werden vor allem schwarzes Recyclinggranulat oder -fasern, für sichtbare Oberflächen vorzugsweise farbiges EPDM-Granulat eingesetzt.

Bei den Elastikschichten unterscheidet man folgende Systeme:
- Gummigranulat- oder -faserbeläge im weitesten Sinne, hergestellt aus z. B. Styrol-Butadien-Kautschuk (SBR)-, Ethylen-Propylen-Dien-Copolymer (EPDM)-, Ethylen-Vinylacetat-Copolymer (EVA)- oder Recycling-Granulat der Körnung 0,5 bis 50 mm oder aus Fasern der Länge 0,1 bis 50 mm. Verwendung finden diese Beläge als Oberfläche für z. B. Ballspielanlagen, Schulsportanlagen, Leichtathletiklaufbahnen oder Tennisbeläge oder aber als nicht sichtbare, überbaute Elastikschicht für wasserdurchoder -undurchlässige Sportbeläge oder auch Kunstrasenbeläge.
- Gummigranulat-Splitt-Beläge, hergestellt aus z. B. SBR-, EPDM-, EVA- oder Recycling-Granulat der Körnung 0,5 bis 50 mm oder aus Fasern der Länge 0,1 bis 50 mm sowie mineralischen Zuschlagstoffen der Körnung 1 bis 20 mm. Verwendet werden diese Beschichtungen als elastische Tragschicht vor allem unter Kunstrasen aber auch als Gehwegbelag.
- Beläge anderer granulierter Materialien wie Kork, PVC, Polyethylen, PU-Schaum, Verbundschaum oder deren Fasern.
- Kombi-Beläge aus Recycling- und synthetisch hergestellten Granulaten oder Fasern.
- Granulatbeläge mit UV-beständiger Versiegelung

### 2) Haftvermittler und Grundierungen

Um eine ausreichende Haftung von Sportbodenbelägen auf Untergründen wie Asphalt, zementgebundenen Untergründen, Holz oder Holzestrich zu erhalten, ist es oft notwendig, vor der Konstruktion eines Sportbodens einen Haftvermittler oder eine Grundierung zu applizieren.
Wie bei den Bindemitteln handelt es sich in der Regel um feuchtigkeitshärtende Polyurethanprepolymere, die zur besseren Penetration in den Untergrund in der Regel erhebliche Mengen organische Lösemittel enthalten. Es werden auch zweikomponentig härtende Haftvermittler oder Grundierungen verwendet, wobei Polyisocyanate oder Prepolymere in einem vorgegebenen Mischungsverhältnis mit einer auf Polyol basierenden Formulierung ausgehärtet werden. Auch lösemittelfreie Haftvermittler oder Grundierungen sind bekannt.

### 3) Spritzbeschichtungen

Auf Asphalt, vorzugsweise aber auf elastischen Untergründen wie auf mit Polyurethan-Bindemittel gebundenen Gummigranulatmatten, können in der Regel mit Zuschlagstoffen (z. B. Gummigranulat kleiner Körnung) gefüllte Polyurethanbeschichtungen spritzend appliziert werden. Dabei werden i. a. wasserdurchlässige, durch vorherige Abspachtelung des Untergrundes aber auch wasserundurchlässige Strukturbeläge erhalten. Sowohl ein- als auch zweikomponentig formulierte Strukturspritzbeschichtungen sind gewöhnlich feuchtigkeitshärtend und enthalten zur Gewährleistung einer guten Verspritzbarkeit erhebliche Mengen organischer Lösemittel. Die auf dem Markt befindlichen Polyurethan-Spritzbeschichtungen enthalten neben den beschriebenen reaktiven Substanzen und Lösemitteln auch Füllstoffe, Pigmente, Katalysatoren und thixotropierende Agentien.

Bei den Spritzbeschichtungen wird zwischen folgenden Systemen unterschieden:
- Direkte Verspritzung der ungefüllten Spritzbeschichtung auf vorgehend definierte, bauseits (durch gängige Einbaufertiger) hergestellte oder auch vorgefertigte Elastikschicht oder andere Untergründe (z. B. Asphalt, zementgebundene Untergründe, Holz); eventuell anschließend mit einem elastischen Granulat (z. B. EPDM) oberflächlich definiert oder im Überschuß abgestreut.
- Verspritzung der zu 5 bis 80 Gew.-% mit Struktur-Füllstoffen (wie SBR-, EPDM- oder PVC-Granulat, PU-Schnitzel) gefüllten Spritzbeschichtung auf vorgehend definierte, bauseits (durch gängige Einbaufertiger) hergestellte oder auch vorgefertigte Elastikschicht oder andere Untergründe (z. B. Asphalt, zementgebundene Untergründe, Holz). Der entstehende i. a. wasserdurchlässige Sportbodenbelag findet Verwendung für Leichtathletiklaufbahnen, Schulsportanlagen und Ballspielanlagen.
- Vor Applikation der zu 5 bis 80 Gew.-% mit Struktur-Füllstoffen (wie SBR-, EPDM- oder PVC-Granulat, PU-Schnitzel) gefüllten Spritzbeschichtung wird die Oberfläche der vorgehend definierten, bauseits (durch gängige Einbaufertiger) hergestellten oder auch vorgefertigten Elastikschicht mit einem Spachtelmaterial für den Porenschluß geschlossen. Es entsteht ein wasserundurchlässiger Sportbodenbelag, der für Leichtathletiklaufbahnen, Schulsport- und Ballspielanlagen verwendet werden kann.

### 4) Verlaufsbeschichtungen

Verlaufsbeschichtungen können nach evtl. Auftragen eines Haftvermittlers direkt auf Asphalt, zementgebundene Untergründe, Holz, Holzestrich, begehbare Polyurethanbeschichtungen oder auch abgespachtelte Gummigranulatmatten appliziert werden. Die Oberfläche kann später zum Schutz mit einer Versiegelung versehen oder auch (im noch flüssigen Zustand) im Überschuß mit Gummigranulat abgestreut werden.
Stand der Technik sind zweikomponentig härtende Polyurethanbeschichtungen, bei denen eine Komponente gewöhnlich aus einem oder mehreren höherfunktionellen Polyalkoholen (z. B. Polyether- und/oder Polyesteralkohole), Füllstoffen, Pigmenten, Katalysatoren und Additiven zur Einstellung von Entlüftung, Verlauf und Absetzverhalten besteht. Die Isocyanat-Komponente ist i. a. ein aromatisches Polyurethan-Prepolymer. In der Regel sind Polyurethan-Verlaufsbeschichtungen lösemittelfrei, gelegentlich aber weichmacherhaltig formuliert.

Bei den Verlaufsbeschichtungen unterscheidet man zwischen folgenden Systemen:
- Direkte Applikation der Verlaufsbeschichtung auf eine zuvor mit einem Spachtelmaterial geschlossene, vorgehend definierte, bauseits (durch gängige Einbaufertiger) hergestellte oder auch vorgefertigte Elastikschicht. Eventuell kann anschließend mit einem elastischen Granulat (z. B. EPDM) oberflächlich (definiert oder im Überschuß) abgestreut werden; weiterhin ist es möglich, die Oberfläche (glatt oder abgestreut) mit einer pigmentierten oder unpigmentierten Polyurethan-basierenden Versiegelung zu schützen. Diese wasserundurchlässige Belagsart findet weitverbreitet Verwendung für spikefeste Leichtathletiklaufbahnen oder Mehrzwecksportanlagen, aber auch Sporthallenböden.
- Auf die mit einem Spachtelmaterial geschlossene, vorgehend definierte Elastikschicht kann die Polyurethanbeschichtung auch nach Abmischung mit 5 bis 80 Gew.-% Gummigranulat der Körnung 0,1 bis 10 mm direkt durch z. B. Rollen, Spritzen oder Rakeln appliziert werden. Eine nachträgliche Oberflächenversiegelung ist möglich.
- Einschichtig applizierte Verlaufsbeschichtungen mit glatter, versiegelter oder durch ein Einstreugranulat strukturierter Oberfläche. Einsatz finden derartige Systeme vor allem für Ballspiel- oder Tennisanlagen.
- Mehrschichtig applizierte Verlaufsbeschichtungen mit glatter, versiegelter oder durch ein Einstreugranulat strukturierter, u. U. ebenfalls versiegelter Oberfläche. Jede Einzelschicht kann, muß aber nicht, mit einem Struktur-Füllmaterial abgestreut werden. Einsatz finden derartige Systeme für Leichtathletiklaufbahnen, Mehrzwecksportanlagen, aber auch für Mehrzweck- und Leichtathletik-Sporthallen.

### 5) Spachtelmassen

Spachtelmassen erlauben einen Porenverschluß von vorgefertigten oder ortseingebauten Gummigranulatbelägen oder anderen Untergründen für die nachfolgende Applikation einer Verlaufsbeschichtung oder für die Konstruktion von wasserundurchlässigen Strukturspritzbeschichtungen.
Die auf dem Markt befindlichen Spachtelmassen sind zweikomponentig formuliert. Die A-Komponente besteht i. a. aus ein oder mehreren höherfunktionellen Polyalkoholen (z. B. Polyether- und/oder Polyesteralkohole), Füllstoffen, Pigmenten, Katalysatoren und Thixotropierungsmitteln; die B-Komponente ist ein Polyisocyanat oder ein Polyurethan-Prepolymer auf Basis eines aromatischen Isocyanats. In der Regel sind Polyurethan-Spachtelmassen lösemittelfrei formuliert.

### 6) Klebstoffe

Klebstoffe dienen bei der Herstellung von Sportbodenbelägen vor allem zur Verklebung von Elastikmatten, z. B. vorgefertigten Gummigranulatmatten, auf Asphalt und zementgebundenen Untergründen. Klebstoffe lassen sich einkomponentig feuchtigkeitshärtend oder zweikomponentig formulieren. Sie enthalten neben Füllstoffen, Haftvermittlern und Katalysatoren, im Zweikomponentenfall auch höherfunktionelle Polyalkohole (z. B. Polyether- und/oder Polyesteralkohole). Das Isocyanat ist polyfunktioneller Natur und stellt oftmals ein aromatisches Polyurethan-Prepolymer dar. Auch Weichmacher oder Lösemittel können Formulierungsbestandteile sein.

### 7) Versiegelungen

Versiegelungen werden in vielen Systemen bei der Herstellung von Sportbodenbelägen im letzten Arbeitsgang zur Erhöhung von Verschleißfestigkeit, Witterungsbeständigkeit, Farbtonbeständigkeit oder Chemikalienbeständigkeit bzw. zur Einstellung von Glanz und Rutschfestigkeit appliziert.
Versiegelungen werden in der Regel zweikomponentig formuliert und enthalten in der A-Komponente neben Polyalkoholen (z. B. Polyether- und/oder Polyesteralkohole), Mattierungsmitteln, Pigmenten, Additiven zur Einstellung von Entlüftung, Verlauf und Absetzverhalten erhebliche Mengen organischen Lösemittels. Die Härter-Komponente besteht i. a. aus modifizierten aliphatischen Isocyanaten.

Nachteilig bei allen diesen Formulierungskomponenten auf Polyurethan-Basis ist die Tatsache, daß diese Produkte isocyanathaltig sind und teilweise große Mengen an Lösemittel enthalten, so daß von diesen Komponenten ein erhebliches Gefahrenpotential für Mensch und Umwelt ausgeht, weshalb bei deren Verarbeitung besondere Umweltschutz- und Sicherheitsmaßnahmen erforderlich sind. Außerdem härten diese isocyanathaltigen Formulierungen bei tiefen Temperaturen äußerst langsam aus und erreichen durch die Nebenreaktion mit Luftfeuchtigkeit oftmals nur ein vermindertes Eigenschaftsniveau.

Der vorliegenden Erfindung lag daher die Aufgabe zugrunde, Formulierungskomponenten für Sportbodenbeläge auf Polyurethan-Basis zu entwickeln, welche die genannten Nachteile des Standes der Technik nicht aufweisen, sondern sich sowohl durch gute Umweltverträglichkeit als auch durch eine verbesserte Verarbeitbarkeit auszeichnen.
Diese Aufgabe wurde erfindungsgemäß dadurch gelöst, daß man wäßrige, isocyanatfreie Polyurethan-Dispersionen mit einem Feststoffgehalt von 40 bis 70 Gew.-% und einem Lösemittelgehalt von ≤ 10 Gew.-% in Formulierungen für Sportbodenbeläge verwendet. Es hat sich nämlich überraschenderweise gezeigt, daß diese Polyurethan-Dispersionen nicht nur umweltfreundlicher und leichter verarbeitbar sind, sondern darüber hinaus auch teilweise verbesserte Produkteigenschaften der entsprechenden Sportbodenbeläge, wie z. B. mechanische Eigenschaften (Zugfestigkeit, Dehnung), UV-Beständigkeit sowie Farbstabilität, ermöglichen. Außerdem können bei der Applikation höhere Schichtdicken aufgetragen werden im Vergleich zu den isocyanathaltigen luftfeuchtigkeitshärtenden Systemen, was ebenfalls nicht vorhersehbar war.

Die erfindungsgemäß vorgeschlagenen wäßrigen, isocyanatfreien Polyurethan-Dispersionen weisen einen Feststoffgehalt von 40 bis 70 Gew.-%, und einen Lösemittelgehalt von ≤ 10 Gew.-%, insbesondere von < 5 Gew.-%, auf. Gemäß einer besonders bevorzugten Ausführungsform werden die entsprechenden Polyurethan-Dispersionen in lösemittelfreier Form eingesetzt. Im Sinne der Anmeldung bedeutet der Begriff "isocyanatfrei", daß der Isocyanatgehalt der lösemittelfreien Polyurethan-Dispersion < 0,1 %, bevorzugt < 0,01 % beträgt. Besonders bevorzugt enthält die lösemittelfreie Polyurethandispersion überhaupt kein Isocyanat.

Die bevorzugte mittlere Partikelgröße des Polyurethanpolymers beträgt 100 bis 500 nm, vorzugsweise 200 bis 400 nm, wobei sich die entsprechenden Angaben auf Messungen mit Hilfe der Photonenkorrelationsspektroskopie (PCS) beziehen. Das entsprechende Polyurethanpolymer weist in der Regel eine mittlere Molekularmasse von 25 000 bis 100 000 Dalton auf. Die entsprechenden Angaben beziehen sich auf das Zahlenmittel Mₙ und Messung mit Hilfe der Gelpermeationschromatographie (GPC).

Derartige wäßrige Polyurethan-Dispersionen sind bereits bekannt, wobei die bevorzugte lösemittelfreie Polyurethan-Dispersion sowie deren Herstellung in der deutschen Patentanmeldung 198 12 751.0 beschrieben sind. Das Herstellungsverfahren ist hierbei dadurch gekennzeichnet, daß man
a) 10 bis 50 Gew.-% einer höhermolekularen Polyol-Komponente (A) (i) mit zwei oder mehreren gegenüber Polyisocyanaten reaktiven Hydroxyl-Gruppen und einer Molekularmasse von 250 bis 20 000 Dalton sowie ggf. 0,5 bis 5 Gew.-% einer niedermolekularen Polyol-Komponente (A) (ii) mit zwei oder mehreren gegenüber Polyisocyanaten reaktiven Hydroxyl-Gruppen und einer Molekularmasse von 60 bis 250 Dalton mit 5 bis 25 Gew.-% einer Polyisocyanat-Komponente (B), bestehend aus mindestens einem Polyisocyanat, Polyisocyanat-Derivat oder Polyisocyanat-Homologen mit zwei oder mehreren aliphatischen oder aromatischen Isocyanat-Gruppen ggf. in Gegenwart eines Katalysators zu einem Polyurethan-Preaddukt reagieren läßt, danach
b) das Polyurethan-Preaddukt aus Stufe a) mit 0,5 bis 5 Gew.-% einer niedermolekularen und anionisch modifizierbaren Polyol-Komponente (A) (iii) mit zwei oder mehreren gegenüber Polyisocyanaten reaktiven Hydroxyl-Gruppen und einer oder mehreren gegenüber Polyisocyanaten inerten Carboxyl-Gruppen, die in Gegenwart von Basen vollständig oder teilweise in Carboxylat-Gruppen überführt werden können, zum entsprechenden Prepolymer umsetzt,
c) das Prepolymer aus Stufe b) mit 0,25 bis 2,5 Gew.-% einer Neutralisations-Komponente (C) zur vollständigen oder teilweisen Neutralisation der Carboxyl-Gruppen reagieren läßt, anschließend oder gleichzeitig
d) das neutralisierte Prepolymer aus Stufe c) in 10 bis 60 Gew.-% Wasser, das ggf. noch 10 bis 70 Gew.-% einer Formulierungs-Komponente (F) bestehend aus Füllstoffen, Pigmenten, Weichmachern, Fasermaterialien und sonstigen üblichen Additiven enthält, dispergiert, im Anschluß daran
e) die Dispersion aus Stufe d) mit 0,25 bis 2,5 Gew.-% einer Kettenverlängerungs-Komponente (D) bestehend aus mindestens einem Polyamin mit einer oder mehreren gegenüber Polyisocyanaten reaktiven Amino-Gruppe zur Umsetzung bringt, und
f) ggf. die Dispersion aus Stufe e) mit 0,05 bis 0,5 Gew.-% einer Kettenstopper-Komponente (E) bestehend aus mindestens einem Monoamin mit einer gegenüber Polyisocyanaten reaktiven Amino-Gruppe reagieren läßt.

Die Komponente (A) (i) besteht hierbei aus mindestens einem höhermolekularen Polyol mit zwei oder mehreren gegenüber Polyisocyanaten reaktiven Hydroxyl-Gruppen und einer mittleren Molekular-Masse (Zahlenmittel Mₙ) von 250 bis 20 000 Dalton, und zwar insbesondere auf Basis eines Polyether- und/oder Polyester-Polyols. Dabei handelt es sich vorzugsweise um polymere Polyole wie Polyalkylenglykole, aliphatische oder aromatische Polyester, Polycaprolactone, Polycarbonate, Makromonomere, Telechele oder Epoxid-Harze oder Gemische daraus. Polyalkylenglykole werden aus Monomeren wie Ethylenoxid, Propylenoxid, Butylenoxid, Tetrahydrofuran durch Polymerisation in Gegenwart von Bortrifluorid oder durch Polyaddition an Starter-Verbindungen mit reaktiven Wasserstoffatomen wie Wasser, Alkohole, Amine oder Bisphenol A erhalten. Dabei können auch Gemische der Monomeren gleichzeitig oder nacheinander eingesetzt werden. Als geeignete Polyalkylenglykole können bspw. Polyethylenglykole, Polypropylenglykole (z.B. Voranol-Typen der Fa. Dow), gemischte Polyglykole auf Basis Ethylenoxid und Propylenoxid sowie Polytetramethylenglykole bzw. Polytetrahydrofurane (z.B. PolyTHF 2000 der Fa. BASF) verwendet werden. Als bevorzugt sind lineare bzw. difunktionelle Polypropylenglykole mit einer mittleren Molekularmasse (Zahlenmittel Mₙ) von 3 000 bis 4 000 Dalton anzusehen. Aliphatische oder aromatische Polyester-Polyole werden durch Polykondensations-Reaktion und/oder Polyadditions-Reaktion aus zwei- oder mehrwertigen Alkoholen und zwei- oder mehrwertigen Carbonsäuren, Carbonsäureanhydriden oder Carbonsäureestern erhalten. Als geeignete aliphatische oder aromatische Polyester können bspw. Kondensate auf Basis von 1,2-Ethandiol bzw. Ethylenglykol, 1,4-Butandiol bzw. 1,4-Butylenglykol, 1,6-Hexandiol bzw. 1,6-Hexamethylenglykol und 2,2-Dimethyl-1,3-propandiol bzw. Neopentylglykol sowie 1,6-Hexandisäure bzw. Adipinsäure und 1,3-Benzoldicarbonsäure bzw. Isophthalsäure (z.B. Bester-Typen der Fa. Poliolchimica) eingesetzt werden. Bevorzugt werden lineare bzw. difunktionelle aliphatische oder aromatische Polyester-Polyole mit einer mittleren Molekularmasse (Zahlenmittel Mₙ) von 1 000 bis 3 000 Dalton. Polycaprolactone (z.B. Capa-Typen der Fa. Solvay Interox) und Polycarbonate (z.B. Desmophen C 200 der Fa. Bayer) sind ebenfalls zur Gruppe der Polyester zugehörig. Erstere werden durch Umsetzung von Phosgen bzw. aliphatischen oder aromatischen Carbonaten, wie bspw. Diphenylcarbonat oder Diethylcarbonat, mit zwei-oder mehrwertigen Alkoholen erhalten. Letztere werden durch Polyaddition von Lactonen, wie bspw. ε-Caprolacton, an Starter-Verbindungen mit reaktiven Wasserstoffatomen wie Wasser, Alkohole, Amine oder Bisphenol A hergestellt. Denkbar sind auch synthetische Kombinationen von Polyestern, Polycaprolactonen und Polycarbonaten. Ebenfalls geeignet sind Makromonomere, Telechele oder Epoxid-Harze. Bei den Makromonomeren und Telechelen handelt es sich um Polyhydroxyolefine, wie bspw, α-ω-Dihydroxypolybutadiene, α-β-Dihydroxy(meth)acrylsäureester, αω-Dihydroxy(meth)acrylsäureester oder α-ω- Dihydroxypolysiloxane. Bei den EpoxidHarzen handelt es sich vorzugsweise um Derivate des Bisphenol-A-diglycidethers (BADGE).

Die Komponente (A) (ii) besteht hierbei aus mindestens einem niedermolekularen Polyol mit zwei oder mehreren gegenüber Polyisocyanaten reaktiven Hydroxyl-Gruppen und einer Molekular-Masse von 60 bis 250 Dalton. Als geeignete niedermolekulare Polyole können bspw. 1,2-Ethandiol bzw. Ethylenglykol, 1,2-Propandiol bzw. 1,2-Propylenglykol, 1,3-Propandiol bzw. 1,3-Propylenglykol, 1,4-Butandiol bzw. 1,4-Butylenglykol, 1,6-Hexandiol bzw. 1,6-Hexamethylenglykol, 2-Methyl-1,3-propandiol (Handelsname MPDiol Glycol® der Fa. Arco Chemical), 2,2-Dimethyl-1,3-propandiol bzw. Neopentylglykol, 1,4-Bis-(hydroxymethyl)-cyclohexan bzw. Cyclohexandimethanol, 1,2,3-Propantriol bzw. Glycerol, 2-Hydroxymethyl-2-methyl-1,3-propanol bzw. Trimethylolethan, 2-Ethyl-2-hydroxymethyl-1,3-propandiol bzw. Trimethylolpropan, 2,2-Bis-(hydroxymethyl)-1,3-propandiol bzw. Pentaerythrit eingesetzt werden.

Die Komponente (B) besteht dabei aus mindestens einem aliphatischen oder aromatischen Polyisocyanat, Polyisocyanat-Derivat oder Polyisocyanat-Homologen mit zwei oder mehreren Isocyanat-Gruppen. Geeignet sind insbesondere die in der Polyurethan-Chemie hinreichend bekannten Polyisocyanate oder Kombinationen daraus. Als geeignete aliphatische Polyisocyanate können bspw. 1,6-Diisocyanatohexan (HDI), 1-Isocyanato-5-isocyanatomethyl-3,3,5-trimethyl-cyclohexan (IPDI), Bis-(4-isocyanatocyclo-hexyl)-methan (H₁₂MDI), 1,3-Bis-(1-isocyanato-1-methyl-ethyl)-benzol (m-TMXDI) bzw. technische Isomeren-Gemlsche der einzelnen aromatischen Polyisocyanate eingesetzt werden. Als geeignete aromatische Polyisocyanate können beispielsweise 2,4-Diisocyanatotoluol (TDI), Bis-(4-isocyanatophenyl)-methan (MDI) und ggf. dessen höhere Homologe (Polymeric MDI) bzw. technische Isomeren-Gemische der einzelnen aromatischen Polyisocyanate eingesetzt werden. Weiterhin sind auch die sogenannten "Lackpolylsocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethylcyclohexan (IPDI) grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der RestGehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit Isocyanat-Gruppen unterschiedlicher Reaktivität bevorzugt.

Die Durchführung der Reaktionsstufe a) ist im Hinblick auf die Reaktionsbedingungen relativ unkritisch. Vorzugsweise erfolgt die Bildung des Polyurethan-Preaddukts in der Weise, daß die Komponente (B) innerhalb eines Zeitraumes von einigen Minuten bis zu einigen Stunden dem Gemisch aus den Komponenten (A) (i) und ggf. (A) (ii) zugesetzt bzw. zudosiert wird oder alternativ dazu das Gemisch der Komponente (A) (i) und ggf. (A) (ii) innerhalb eines Zeitraumes von einigen Minuten bis zu einigen Stunden der Komponente (B) zugesetzt bzw. zudosiert wird.

Das bevorzugte NCO/OH-Equivalent-Verhältnis der Komponenten (A) (Polyole) und (B) (Polyisocyanate) wird auf einen Wert von 1,5 bis 2,5, insbesondere jedoch 1,8 bis 2,2, eingestellt. Der Reaktions-Ansatz wird unter Ausnutzung der Exothermie der Polyadditions-Reaktion bis zum Erreichen des berechneten bzw. theoretischen NCO-Gehaltes bei 60 bis 120 °C, bevorzugt jedoch bei 80 bis 100 °C, unter Inertgas-Atmosphäre gerührt. Die erforderlichen Reaktions-Zeiten liegen im Bereich von einigen Stunden und werden durch Reaktions-Parameter wie die Reaktivität der Komponenten, die Stöchiometrie der Komponenten und die Temperatur beeinflußt.

Die Umsetzung der Komponenten (A) und (B) in der Reaktionsstufe a) kann in Gegenwart eines für Polyadditions-Reaktionen an Polyisocyanaten üblichen Katalysator-Systems erfolgen. Bei Bedarf erfolgt ein Zusatz dieser Katalysatoren in Mengen von 0,01 bis 1 Gew.-% bezogen auf den Reaktions-Ansatz.

Gebräuchliche Katalysatoren für Polyadditions-Reaktionen an Polyisocyanate sind bspw. Dibutylzinnoxid, Dibutylzinndilaurat (DBTL), Triethylamin, Zinn(II)-octoat, 1,4-Diazabicyclo[2,2,2]octan (DABCO), 1,4-Diaza-bicyclo[3,2,0]-5-nonen (DBN), 1,5-Diaza-bicyclo[5,4,0]-7-undecen (DBU).

In der nachfolgenden Reaktionsstufe b) erfolgt die Umsetzung des Polyurethan-Preadduks aus Stufe a) mit 0,5 bis 5 Gew.-% der Komponente (A) (iii) zum entsprechenden Prepolymer, wobei die vorzugsweise feingemahlene Polyol-Komponente (A) (iii) mit einer Teilchengröße < 150 µm innerhalb eines Zeitraumes von einigen Minuten bis zu einigen Stunden dem Polyurethan-Preaddukt aus Stufe a) zugesetzt bzw. zudosiert wird.

Die Komponente (A) (iii) besteht aus mindestens einem niedermolekularen und anionisch modifizierbaren Polyol mit zwei oder mehreren gegenüber Polyisocyanaten reaktiven Hydroxyl-Gruppen und einer oder mehreren gegenüber Polyisocyanaten inerten Carboxyl-Gruppen, die in Gegenwart von Basen ganz oder teilweise in Carboxylat-Gruppen überführt werden können. Als niedermolekulare und anionisch modifizierbare Polyole können bspw. 2-Hydroxymethyl-3-hydroxypropansäure bzw. Dimethylolessigsäure, 2-Hydroxymethyl-2-methyl-3-hydroxypropansäure bzw. Dimethylolpropionsäure, 2-Hydroxymethyl-2-ethyl-3-hydroxypropansäure bzw. Dimethylolbuttersäure, 2-Hydroxymethyl-2-propyl-3-hydroxypropansäure bzw. Dimethylolvaleriansäure, Citronensäure, Weinsäure eingesetzt werden. Bevorzugt werden Bishydroxyalkancarbonsäuren mit einer Molekularmasse von 100 bis 200 Dalton eingesetzt und vorzugsweise 2-Hydroxymethyl-2-methyl-3-hydroxypropansäure bzw. Dimethylolpropionsäure (Handelsname DMPA® der Fa. Mallinckrodt).

Polyadditions-Reaktionen zur Herstellung derartiger Polyurethan-Prepolymere erfordern hohe NCO/OH-Equivalent-Verhältnisse insbesondere von 1,5 bis 2,5, vorzugsweise 1,8 bis 2,2. Zudem werden vorzugsweise Polyisocyanate mit Isocyanat-Gruppen unterschiedlicher Reaktivität eingesetzt, um engere Molekular-Massen-Verteilungen mit geringerer Uneinheitlichkeit zu erhalten. Dementsprechend werden Polyurethan-Prepolymere mit linearer Struktur bevorzugt, die sich aus difunktionellen Polyol- und Polyisocyanat-Komponenten zusammensetzen.

Die Herstellung der Prepolymere entsprechend Reaktionsstufe b) erfolgt vorzugsweise bei Temperaturen von 60 bis 120 °C, insbesondere bei 80 bis 100 °C.
Die Viskosität der Polyurethan-Prepolymere ist relativ niedrig und weitgehend unabhängig von der Struktur der verwendeten Polyol- und Polyisocyanat-Komponenten. Ein Zusatz von Lösemitteln zur Viskositätsverminderung oder zur Verbesserung der Dispergier-Eigenschaften der Polyurethan-Prepolymere ist daher nicht erforderlich. Die besondere Struktur der Prepolymere ermöglicht die Herstellung von Produkten mit außerordentlich hohen Feststoff-Gehalten. Außerdem werden aufgrund der gleichmäßigen Verteilung der Carboxyl- bzw. Carboxylat-Gruppen über das Polyurethan-Polymer nur geringe Ladungsdichten für die Stabilisierung der entsprechenden Polyurethan-Dispersionen benötigt.

Das Polyurethan-Prepolymer aus Stufe b) wird in der nachfolgenden Reaktions-Stufe c) mit 0,25 bis 2,5 Gew.-% einer Neutralisations-Komponente (C) zur vollständigen oder teilweisen Neutralisation der Carboxyl-Gruppen umgesetzt (direkte Neutralisation). Die Neutralisations-Komponente (C) ist vorzugsweise in einer solchen Menge vorhanden, daß der Neutralisations-Grad bezogen auf die freien Carboxyl-Gruppen des Polyurethan-Prepolymers bei 70 bis 100 Equivalent-%, vorzugsweise bei 80 bis 90 Equivalent-%, liegt. Bei der Neutralisation werden aus den Carboxyl-Gruppen Carboxylat-Gruppen gebildet, die zur anionischen Modifizierung bzw. Stabilisierung der Polyurethan-Dispersion dienen. Die Reaktions-Stufe c) wird bei einer Temperatur von 40 bis 60 °C , vorzugsweise bei ca. 50 °C durchgeführt. Alternativ dazu kann die Neutralisations-Komponente (C) auch gemäß Stufe d) im Dispergier-Medium vorgelegt werden.

Die Neutralisations-Komponente (C) besteht aus einer oder mehreren Basen, die zur vollständigen oder teilweisen Neutralisation der Carboxyl-Gruppen dienen. Als geeignete Basen können tertiäre Amine wie N,N-Dimethylethanolamin, N-Methyldiethanolamin, Triethanolamin, N,N-Dimethylisopropanolamin, N-Methyl-diisopropanolamin, Triisopropylamin, N-Methyl-morpholin, N-Ethyl-morpholin, Triethylamin, Ammoniak oder Alkalihydroxide wie Lithiumhydroxid, Natriumhydroxid, Kaliumhydroxid eingesetzt werden. Bevorzugt werden tertiäre Amine und insbesondere Triethylamin eingesetzt.

Das neutralisierte Polyurethan-Prepolymer aus Stufe c) wird in der nachfolgenden Reaktions-Stufe d) in 10 bis 60 Gew.-% Wasser, das ggf. noch 10 bis 70 Gew.-% einer Formulierungs-Komponente (F) bestehend aus Füllstoffen, Pigmenten, Weichmachern, Fasermaterialien, Dispergierhilfsmitteln, Rheologiehilfsmitteln, Entschäumern, Haftvermittlern, Frostschutzmitteln, Flammschutzmitteln, Bakteriziden, Fungiziden, Konservierungsmitteln oder weiteren Polymeren bzw. Polymer-Dispersionen, dispergiert. Bei der Dispergierung wird das neutralisierte Polyurethan-Prepolymer in das Dispergier-Medium überführt und bildet dabei eine Polyurethan-Prepolymer-Dispersion aus. Das neutralisierte Polyurethan-Prepolymer bildet dabei Micellen, die an der Oberfläche stabilisierende Carboxylat-Gruppen und im Inneren reaktive Isocyanat-Gruppen aufweisen. Alle kationischen Gegen-Ionen zu den anionischen Carboxylat-Gruppen sind im Dispergier-Medium gelöst. Die Begriffe "Dispergierung" bzw. "Dispersion" beinhalten, daß neben dispergierten Komponenten mit micellarer Struktur auch solvatisierte und/oder suspendierte Komponenten enthalten sein können. Für die Überführung des Polyurethan-Prepolymers in die wäßrige Phase kann entweder das Polyurethan-Prepolymer in das Dispergier-Medium oder das Dispergier-Medium in das Polyurethan-Prepolymer eingerührt werden. Die Reaktionsstufe d) wird bei einer Temperatur von 30 bis 50 °C , vorzugsweise bei ca. 40 °C, durchgeführt.

Zu der beschriebenen Vorgehensweise existieren noch weitere Alternativen. Die Stufen c) und d) können in der Weise zusammengefaßt werden, daß die Neutralisations-Komponente (C) dem Wasser zugesetzt wird, in dem das nicht neutralisierte Polyurethan-Prepolymer entsprechend Reaktionstufe d) dispergiert wird (indirekte Neutralisation). Die Formulierungs-Komponente (F) kann vor der Dispergierung gemäß Reaktionsstufe d) ganz oder teilweise in das Polyurethan-Prepolymer eingerührt werden, falls das Herstellungsverfahren dadurch nicht beeinträchtigt wird.

Die Polyurethan-Prepolymer-Dispersion aus Stufe d) wird in der anschließenden Reaktionsstufe e) mit 0,25 bis 2,5 Gew.-% einer Kettenverlängerungs-Komponente (D) und ggf. in der Reaktionsstufe f) mit 0,05 bis 0,5 Gew.-% einer Kettenstopper-Komponente (E) umgesetzt.

Die Kettenverlängerungs-Komponente (D) besteht aus mindestens einem Polyamin mit zwei oder mehreren gegenüber Polyisocyanaten reaktiven Amino-Gruppen. Geeignete Polyamine sind beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS) und Ethylendiamin oder beliebige Kombination dieser Polyamine. Bevorzugt werden difunktionelle primäre Amine und insbesondere 1,2-Diaminoethan bzw. Ethylendiamin eingesetzt.

Die Kettenstopper-Komponente (E) besteht aus mindestens einem Monoamin mit einer gegenüber Polyisocyanaten reaktiven Amino-Gruppe. Geeignete Monoamine sind beispielsweise Ethylamin, Diethylamin,
n-Propylamin, Di-n-propylamin, Isopropylamin, Diisopropylamin, n-Butylamin, Di-n-butylamin, Ethanolamin, Diethanolamin, Isopropanolamin, Diisopropanolamin, Morpholin, Piperidin, Pyrrolidin oder beliebige Kombinationen dieser Polyamine.

Bevorzugt werden monofunktionelle primäre Amine und insbesondere 2-Aminopropan bzw. Isopropylamin eingesetzt.

Die Kettenverlängerungs-Komponente (D) wird gemäß einer bevorzugten Ausführungsform in einer solchen Menge eingesetzt, daß der Kettenverlängerungs-Grad bezogen auf die freien Isocyanat-Gruppen des Polyurethan-Prepolymers bei 50 bis 100 Equivalent-%, vorzugsweise bei 70 bis 80 Equivalent-%, liegt. Die Kettenstopper-Komponente (E) wird ggf. in einer solchen Menge eingesetzt, daß der Kettenstoppungs-Grad bezogen auf die freien Isocyanat-Gruppen des Polyurethan-Prepolymers bei 1 bis 20 Equivalent-%, vorzugsweise bei 5 bis 10 Equivalent-%, liegt. Bei Verwendung der Kettenverlängerungs-Komponente (D) und der Kettenstopper-Komponente (E) können die Komponenten entweder nacheinander oder gleichzeitig bzw. als Gemisch der Polyurethan-Prepolymer-Dispersion aus Stufe d) zugesetzt werden. Die Kettenverlängerung der Polyurethan-Prepolymer-Dispersion führt zum Aufbau der Molekularmasse innerhalb der Micellen und zur Bildung einer Polyurethan-Polyharnstoff-Dispersion hoher Molekular-Masse. Die Kettenverlängerungs-Komponente (D) reagiert dabei mit reaktiven Isocyanat-Gruppen wesentlich rascher als Wasser. Die Kettenstoppung der Polyurethan-Prepolymer-Dispersion führt zum Abbruch des Aufbaus der Molekularmasse innerhalb der Micellen und zur Bildung einer Polyurethan-Polyharnstoff-Dispersion mit geringerer Molekular-Masse. Die Kettenstopper-Komponente (E) reagiert dabei mit reaktiven Isocyanat-Gruppen wesentlich rascher als Wasser. Im Anschluß an die Reaktions-Stufen e) und f) können evtl. noch vorhandene freie Isocyanat-Gruppen mit Wasser vollständig kettenverlängert werden.

Mit Hilfe der erfindungsgemäß vorgeschlagenen wäßrigen, isocyanatfreien Polyurethan-Dispersionen können alle bisherigen Polyurethan-basierenden Produkte bei der Formulierung von Sportbodenbelägen ersetzt werden. Die Formulierung dieser Produkte ist ausgehend von den Polyurethan-Dispersionen durch Dispergieren von Füllstoffen oder Pigmenten bzw. Vermischen mit flüssigen Bestandteilen möglich. Alternativ hierzu kann auch eine "in situ-Formulierung" direkt bei der Herstellung der Polyurethan-Dispersion durchgeführt werden, d. h. in destilliertes Wasser werden zunächst Füllstoffe und Pigmente und anschließend das Polyurethanpolymer eindispergiert. Auf diese Weise können die Füllstoffe in die Polyurethan-Teilchen eingebunden werden und man erhält besonders hochwertige Produkte mit geringem Absetzverhalten. Bei den in situ formulierten Polyurethan-Dispersionen werden außerdem außerordentlich hohe Feststoffgehalte bei vergleichsweise niedrigen Viskositäten erzielt, was bei einer konventionellen Formulierung der reinen Polyurethan-Dispersionen nicht möglich wäre.

Die erfindungsgemäß vorgeschlagenen wäßrigen Polyurethan-Dispersionen eignen sich insbesondere als Formulierungskomponenten bei der Herstellung von Sportbodenbelägen, insbesondere bei folgenden Anwendungen:
1. Als Bindemittel für Elastikschichten bestehend aus Gummigranulaten oder Fasern, die insbesondere aus SBR-, EPDM-, EVA- oder Recycling-Granulat der Körnung 0,5 bis 50 mm oder aus Fasern der Länge 0,1 bis 50 mm hergestellt sind. Ggf. können diese Elastikschichten noch mineralische Zuschlagstoffe der Körnung 1 bis 20 mm enthalten.
2. Für Spritzbeschichtungen auf elastischen (z. B. Gummigranulatmatten) oder starren Untergründen (z. B. Asphalt), die ggf. noch 5 bis 80 Gew.-% an Strukturfüllstoffen (wie z.B. SBR-, EPDM- oder PVC-Granulat, PU-Schnitzel) enthalten können.
3. Als Verlaufsbeschichtungen auf elastischen (z. B. Gummigranulatmatten) oder starren Untergründen (Asphalt oder Beton), wobei die Applikation ein- oder mehrschichtig sowie ggf. mit Einstreugranulat (insbesondere EPDM-Granulat, 1 bis 4 mm) erfolgen kann.
4. Als Haftvermittler oder Grundierung auf die Untergründe (wie z. B. Asphalt, zementgebundene Untergründe, Holz oder Holzestrich) von Sportbodenbelägen.
5. Als Spachtelmassen für den Porenverschluß von Untergründen (bspw. vorgefertigten oder ortseingebauten Gummigranulatbelägen) von Sportbodenbelägen für die nachfolgende Applikation einer Verlaufsbeschichtung oder für die Konstruktion von wasserundurchlässigen Strukturspritzbeschichtungen.
6. Als Klebstoffe zur Verklebung von vorgefertigten Elastikschichten (z. B. vorgefertigte Gummigranulatmatten) auf Asphalt oder zementgebundenen Untergründen von Sportbodenbelägen.
7. Für die Versiegelung (ggf. in pigmentierter Form) von Sportbodenbelägen zur Erhöhung der Verschleißfestigkeit, Witterungsbeständigkeit , Farbtonbeständigkeit oder Chemikalienbeständigkeit bzw. zur Einstellung von Glanz und Rutschfestigkeit.

Durch Einsatz von UV-Stabilisatoren vom Typ der sterisch gehinderten Amine in Konzentrationen von 0,1 bis 1,0 Gew.-% bezogen auf die Gesamtmasse der Formulierung kann die Kreidungs- und Dauerwasserbeständigkeit (Warmwasser von ca. 50 °C) von Formulierungen auf Basis von Polyurethan-Dispersionen wesentlich erhöht werden. Dies konnte eindeutig in einem speziell für diesen Zweck konzipierten Gerät in einem Extremklima (intensive UV-Strahlung, erhöhte Temperatur, gleichzeitige Beregnung) nachgewiesen werden. Auch bei auf gleiche Weise geschützten konventionellen (isocyanathaltige) Beschichtungen konnte eine deutliche Verbesserung erreicht werden.
Bei den verwendeten UV-Stabilisatoren handelt es sich um Systeme vom HALS-Typ (Hindered Amine Light Stabilizer), wie z.B 1,2,2,6,6-Pentamethyl-4-piperidinylester der Dekandisäure (HALS I) oder 2,2,6,6-Tetramethyl-1-isooctyloxy-4-piperidinylester der Dekandisäure (HALS II). Bevorzugt werden HALS-I-Typen eingesetzt. In Kombination mit UV-Stabilisatoren vom HALS-Typ können daneben auch UV-Absorber, wie z.B. substituierte Hydroxyphenylbenzotriazole, Hydroxybenzophenone, Hydroxyphenyls-triazine, und Antioxantidantien, wie z.B. substituierte 2,6-Di-tert-butylphenole, verwendet werden.

Die erfindungsgemäß formulierten Polyurethan-Dispersionen können hierbei je nach Anwendung in Schichten mit einer Gesamtdicke von 0,1 bis 50 mm auf die elastischen oder starren Untergründe aufgebracht werden. Hierzu sind in der Regel 0,1 bis 10,0 kg der formulierten Polyurethan-Dispersion pro m² der zu beschichtenden Fläche und pro Arbeitsgang notwendig. Obgleich die erfindungsgemäß vorgeschlagenen formulierten Polyurethan-Dispersionen in ein- oder zweikomponentiger Form zum Einsatz kommen können, ist die einkomponentige Form wegen der besseren Handhabbarkeit als bevorzugt anzusehen.

Darüberhinaus ist es prinzipiell auch möglich, Abmischungen von Polyurethan-Dispersionen mit konventionellen Polymer-Dispersionen als Bindemittel innerhalb von Formulierungen für Sportbodenbeläge einzusetzen. Bei diesen Polymer-Dispersion handelt es sich um wäßrige Emulsionspolymerisate auf Basis von ethylenisch ungesättigten Monomeren, wie z.B. (Meth)acrylate, Styrol, Vinylacetat.

Neben dieser verbesserten Verarbeitbarkeit sowie der sehr guten Umweltverträglichkeit ermöglichen die erfindungsgemäß vorgeschlagenen wäßrigen Polyurethan-Dispersionen noch folgende vorteilhafte Produkteigenschaften im Hinblick auf die entsprechenden Sportbodenbeläge:
- Mechanische Eigenschaften (Zugfestigkeit, Dehnung) von Produktfilmen sind wider Erwarten mindestens gleich, im allgemeinen sogar deutlich besser als bei isocyanathaltigen Systemen.
- Durch Variation der Polyurethan-Dispersion ist ein breites Eigenschaftsspektrum der Produkte einstellbar, so daß auch deutlich weichere Beläge als mit herkömmlichen Ausgangsstoffen zugänglich sind.
- Alle Systeme zeigen eine sehr gute UV- und Farbstabilität, so daß bei nicht überschichteten, farbigen Elastikschichten auf eine Versiegelung verzichtet werden kann. Marktübliche, konventionelle Systeme zeigen eine deutlich verringerte UVund Witterungsbeständigkeit.
- Bei der Applikation können höhere Schichtdicken aufgetragen werden als bei isocyanathaltigen luftfeuchtigkeitshärtenden Systemen.
- Die Viskosität besitzt eine geringere Temperaturabhängigkeit als dies bei konventionellen Systemen der Fall ist.
- Die Hydrolysestabilität ist auch ohne Nachvernetzung unerwartet hoch.
- Uneingeschränkte Haftung innerhalb der einzelnen Schichten der oben genannten Systeme ist gegeben.
- Verglichen mit herkömmlichen Systemen ist eine höhere Farbbrillianz bei geringerer Neigung zur Kreidung zu verzeichnen.
- Die Formulierungen für Haftvermittler, Verlaufsbeschichtung, Spritzbeschichtung, Bindemittel, Klebstoff und Spachtelmaterial wurden im Aussenbereich verarbeitet. Haltbarkeit, UV-Beständigkeit, Lagenhaftung, Wasserbeständigkeit, Witterungsbeständigkeit etc. konnten in der Realität beurteilt werden. Die im Labor erhaltenen Ergebnisse konnten bestätigt werden.
- Bei der Strukturspritzbeschichtung erfolgt die Trocknung eines Spritzganges (ca. 2-6 h je nach Bedingungen) signifikant schneller als bei marktüblichen lösemittel- und isocyanathaltigen Strukturspritzbeschichtungen (∼24 h). Dies hat zur Konsequenz, daß Flächen geeigneter Grösse problemlos an einem Tag in zwei Spritzgängen beschichtet werden können. Für den Verarbeiter bedeutet dies eine enorme Zeitersparnis, woraus eine Verbilligung des Einbaus resultiert. Dies ist besonders für Kleinflächen (< 2000 m²) von großer Bedeutung.
- Die außerordentlich guten mechanischen Eigenschaften der Beschichtungen auf Basis Polyurethan-Dispersionen erlauben auch die Konzipierung neuer Systeme mit deutlich geringeren Schichtstärken für den Sportaußen- und -innenbereich.

Die nachfolgenden Beispiele sollen die Erfindung näher veranschaulichen.

### Herstellungsbeispiele A.1 bis A.3

### Beispiel A.1

### Lösemittelfreie Polyurethan-Dispersion mit hohem Feststoff-Gehalt auf Basis von Polypropylenglykol 1000

In einem Vierhalskolben ausgerüstet mit KPG-Rührer, Rückflußkühler, Thermometer und Stickstoff-Deckung wurde ein Gemisch aus 100,00 g eines Polypropylenglykols mit einer Hydroxyl-Zahl von 112,2 mg KOH·g⁻¹ (Handelsname Voranol P1000 der Fa. Dow) und 59,39 g Isophorondiisocyanat (Handelsname Vestanat IPDI der Fa. Hüls) unter Stickstoff-Deckung 2 h bei 80 - 90 °C gerührt.
Nach Zugabe von 4,50 g fein gemahlener Dimethylolpropionsäure (Handelsname DMPA der Fa. Mallinckrodt) zu dem Preaddukt wurde die Mischung unter Stickstoff-Deckung bei 80 - 90 °C weiter gerührt, bis der berechnete NCO-Gehalt erreicht wurde (NCO/OH = 2,00). Der Verlauf der Reaktion wurde acidimetrisch verfolgt. Nach Abschluß der Polyadditions-Reaktion wurde ein NCO-Gehalt von 6,88 Gew.-% (Theorie: 6,85 Gew.-%) gefunden. Nach dem Abkühlen auf 50°C wurde das Prepolymer mit 90 Equivalent-% an Triethylamin direkt neutralisiert.
160,00 g des Prepolymers wurden dann unter intensivem Rühren in 110,77 g demineralisiertem Wasser dispergiert und anschließend zum Aufbau der Polyurethan-Dispersion mit 80 Equivalent-% an Ethylendiamin kettenverlängert.

Es wurde eine stabile Polyurethan-Dispersion mit folgender Charakteristik erhalten:

| Aussehen | milchig-weiße Flüssigk. |
|---|---|
| Feststoff-Gehalt | ca. 60 Gew.-% |
| pH | 6,90 |
| Viskosität-Brookfield | 40 mPa·s (20°C) |
| Mittlere Partikel-Größe | 339 nm |

### Beispiel A.2

### Lösungsmittelfreie Polyurethan-Dispersion mit hohem Feststoff-Gehalt auf Basis eines Polycarbonat-Polyols der Molekularmasse 2000 Dalton

In einem Vierhalskolben ausgerüstet mit KPG-Rührer, Rückflußkühler, Thermometer und Stickstoff-Deckung wurde ein Gemisch aus 100,00 g eines Polycarbonat-Polyols mit einer Hydroxyl-Zahl von 56,1 mg KOH·g⁻¹ (Handelsname Desmophen C 200 der Fa. Bayer) und 47,09 g Isophorondiisocyanat (Handelsname Vestanat IPDI der Fa. Hüls) unter Stickstoff-Deckung 2 h bei 80 bis 90 °C gerührt. Nach Zugabe von 7,50 g fein gemahlener Dimethylolpropionsäure (Handelsname DMPA der Fa. Mallinckrodt) zu dem Preaddukt wurde die Mischung unter Stickstoff-Deckung bei 80 - 90 °C weiter gerührt, bis der berechnete NCO-Gehalt erreicht wurde (NCO/OH = 2,00). Der Verlauf der Reaktion wurde acidimetrisch verfolgt. Nach Abschluß der Polyadditions-Reaktion wurde ein NCO-Gehalt von 5,76 Gew.-% (Theorie: 5,79 Gew.-%) gefunden.
Nach dem Abkühlen auf 50°C wurde das Prepolymer mit 90 Equivalent-% an Triethylamin direkt neutralisiert.
155,00 g des Prepolymers wurden dann unter intensivem Rühren in 106,62 g demineralisiertem Wasser dispergiert und anschließend zum Aufbau der Polyurethan-Dispersion mit 80 Equivalent-% an Ethylendiamin kettenverlängert.

Es wurde eine stabile Polyurethan-Dispersion mit folgender Charakteristik erhalten:

| Aussehen | milchig-weiße Flüssigk. |
|---|---|
| Feststoff-Gehalt | ca. 60 Gew.-% |
| pH | 7,0 |
| Viskosität-Brookfield | 6 mPa·s (20°C) |
| Mittlere Partikel-Größe | 232 nm |

### Beispiel A.3

### Lösemittelfreie Polyurethan-Dispersion mit hohem Feststoff-Gehalt auf Basis von Polypropylenglykol 2000

In einem Vierhalskolben ausgerüstet mit KPG-Rührer, Rückflußkühler, Thermometer und Stickstoff-Deckung wurde ein Gemisch aus 100,00 g eines Polypropylenglykols mit einer Hydroxyl-Zahl von 56,1 mg KOH·g⁻¹ (Handelsname Voranol P2000 der Fa. Dow) und 35,49 g Isophorondiisocyanat (Handelsname Vestanat IPDI der Fa. Hüls) unter Stickstoff-Deckung 2 h bei 80 - 90 °C gerührt.
Nach Zugabe von 4,00 g fein gemahlener Dimethylolpropionsäure (Handelsname DMPA der Fa. Mallinckrodt) zu dem Preaddukt wurde die Mischung unter Stickstoff-Deckung bei 80 - 90 °C weiter gerührt, bis der berechnete NCO-Gehalt erreicht wurde (NCO/OH = 2,00). Der Verlauf der Reaktion wurde acidimetrisch verfolgt. Nach Abschluß der Polyadditions-Reaktion wurde ein NCO-Gehalt von 4,86 Gew.-% (Theorie: 4,81 Gew.-%) gefunden.
Nach dem Abkühlen auf 50°C wurde das Prepolymer mit 90 Equivalent-% an Triethylamin direkt neutralisiert.
140,00 g des Prepolymers wurden dann unter intensivem Rühren in 95,85 g demineralisiertem Wasser dispergiert und anschließend zum Aufbau der Polyurethan-Dispersion mit 80 Equivalent-% an Ethylendiamin kettenverlängert.

Es wurde eine stabile Polyurethan-Dispersion mit folgender Charakteristik erhalten:

| Aussehen | milchig-weiße Flüssigk. |
|---|---|
| Feststoff-Gehalt | ca. 60 Gew.-% |
| pH | 7,41 |
| Viskosität-Brookfield | 75 mPa·s (20°C) |
| Mittlere Partikel-Größe | 309 nm |

### Formulierungsbeispiele B.1 bis B.9

Die prozentualen Angaben beziehen sich jeweils auf Gew.-%

### Beispiel B.1

### Bindemittel für Elastikschichten

| | | |
|---|---|---|
| (1) | 46,9 % | Polyurethan-Dispersion A.1 |
| (2) | 51,3 % | Polyurethan-Dispersion A.2 |
| (3) | 0,5 % | Entlüftungsmittel (Gemisch schaumzerstörender Polysiloxane) |
| (4) | 1,0 % | Netzmittel (Silicontensid) |
| (5) | 0,3 % | Polyurethan-Verdicker |

Alle Komponenten sind flüssig und werden in der oben angegebenen Reihenfolge miteinander vermischt. Nach Zugabe des PU-Verdickers wird mit langsamer Schergeschwindigkeit dispergiert, bis im System keine Viskositätszunahme mehr feststellbar ist.

| Eigenschaften: | |
|---|---|
| Viskosität bei 20 °C | 4 000 mPas |
| Zugfestigkeit eines Films | 22 N/mm² |
| Bruchdehnung eines Films | 500 % |
| Weiterreißfestigkeit eines Films | 30 N/mm² |

Typische Werte eines konventionellen 1K-Bindemittels (z. B. Conipur 322) :
4 000 mPas; 15 N/mm², 400 %

### Beispiel B.2

### Haftvermittler

| | | |
|---|---|---|
| (1) | 70,0 % | Polyurethan-Dispersion A.1 |
| (2) | 27,0 % | entmineralisiertes Wasser |
| (3) | 2,0 % | Netzmittel (Silicontensid) |
| (4) | 1,0 % | Entlüfter (Gemisch schaumzerstörnder Polysiloxane) |

Alle Komponenten sind flüssig und werden in der oben angegebenen Reihenfolge miteinander vermischt und dann mit langsamer Schergeschwindigkeit dispergiert.

| Eigenschaften: | |
|---|---|
| Viskosität bei 20 °C | 40 mPas |

### Beispiel B.3

### Strukturspritzbeschichtung (Variante 1)

| | | |
|---|---|---|
| (1) | 71,5 % | Polyurethan-Dispersion A. 1 |
| (2) | 0,6 % | Netzmittel (Silicontensid) |
| (3) | 0,5 % | Dispergieradditiv (Copolymer mit pigmentaffinen Gruppen) |
| (4) | 0,3 % | Entlüftungsmittel (Gemisch schaumzerstörender Polysiloxane) |
| (5) | 24,0 % | Füllstoff (Calciumcarbonat) |
| (6) | 2,0 % | Pigment (Eisenoxide) |
| (7) | 1,0 % | pyrogene Kieselsäure |
| (8) | 0,1 % | Polyurethan-Verdicker |

Die flüssigen Komponenten (1) bis (4) werden vorgelegt und 5 min homogenisiert. Anschließend werden (5), (6) und (7) bei hoher Schergeschwindigkeit eindispergiert. Nach 10 min erfolgt Zugabe von (8) und Dispersion bis zum Erreichen der Endviskosität. Dabei darf die Temperatur der Formulierung 40 °C nicht übersteigen.

| Eigenschaften: | |
|---|---|
| Viskosität bei 20 °C | 3 000 mPas |
| Zugfestigkeit eines Films | 16 N/mm² |
| Bruchdehnung eines Films | 300 % |
| Weiterreißfestigkeit eines Films | 25 N/mm² |

Typische-Werte einer konventionellen 1K- (z. B. Conipur 217) oder 2K-Spritzbeschichtung (z. B. Conipur 216): 1 000 mPas; 8 N/mm², 400 %

### Beispiel B.4

### Strukturspritzbeschichtung (Variante 2)

Alternativ kann diese Formulierung auch gebrauchsfertig, d. h. bereits in Abmischung mit dem sonst vor Ort zugegebenen Spritzgranulat formuliert werden, was das Handling an der Baustelle erheblich vereinfacht. Hier ist vor der Applikation lediglich eine kurze Homogenisierung des Gemisches notwendig.

| | | |
|---|---|---|
| (1) | 42,8 % | Polyurethan-Dispersion A. 1 |
| (2) | 0,4 % | Netzmittel (Silicontensid) |
| (3) | 0,3 % | Dispergieradditiv (Copolymer mit pigmentaffinen Gruppen) |
| (4) | 0,2 % | Entlüftungsmittel (Gemisch schaumzerstörender Polysiloxane) |
| (5) | 14,4 % | Füllstoff (Calciumcarbonat) |
| (6) | 1,2 % | Pigment (Eisenoxide) |
| (7) | 0,6 % | pyrogene Kieselsäure |
| (8) | 0,1 % | Polyurethan-Verdicker |
| (9) | 40,0 % | EPDM-Granulat der Körnung 0,5 bis 1,5 mm |

Die Formulierung der Basiskomponenten (1) bis (8) erfolgt nach der in Beispiel B.3 beschriebenen Vorgehensweise. Das Gummigranulat (9) wird dann in die fertige Formulierung vorsichtig eingerührt.

### Beispiel B.5:

### Verlaufsbeschichtung

| | | |
|---|---|---|
| (1) | 65,7 % | Polyurethan-Dispersion A. 1 |
| (2) | 1,0 % | Netzmittel (Silicontensid) |
| (3) | 0,5 % | Dispergieradditiv (Copolymer mit pigmentaffinen Gruppen) |
| (4) | 0,3 % | Entlüftungsmittel (Gemisch schaumzerstörender Polysiloxane) |
| (5) | 30,0 % | Füllstoff (Glimmer) |
| (6) | 2,0 % | Pigment (Eisenoxide) |
| (7) | 0,5 % | pyrogene Kieselsäure |

Die flüssigen Komponenten (1) bis (4) werden vorgelegt und 5 min homogenisiert. Unter Rühren werden (5), (6) und (7) zugegeben. Die Mischung wird 20 min dispergiert, wobei die Temperatur 40 °C nicht übersteigen darf.

| Eigenschaften: | |
|---|---|
| Viskosität bei 20 °C | 2 700 mPas |
| Zugfestigkeit eines Films | 13 N/mm² |
| Bruchdehnung eines Films | 250 % |
| Weiterreißfestigkeit eines Films | 35 N/mm² |

Typische Werte einer konventionellen 2K-Verlaufsbeschichtung (z. B. Conipur 210):
3 600 mPas (Gemisch); 2 N/mm², 150 %

### Beispiel B.6:

### Spachtelmasse

| | | |
|---|---|---|
| (1) | 58,5 % | Polyurethan-Dispersion A. 1 |
| (2) | 0,2 % | Dispergieradditiv (Copolymer mit pigmentaffinen Gruppen) |
| (3) | 0,4 % | Entlüftungsmittel (Gemisch schaumzerstörender Polysiloxane) |
| (4) | 37,7 % | Füllstoff (Schwerspat) |
| (5) | 2,0 % | Pigment (Eisenoxide) |
| (6) | 1,0 % | pyrogene Kieselsäure |
| (7) | 0,2 % | Polyurethan-Verdicker |

Die flüssigen Komponenten (1) bis (3) werden vorgelegt und 5 min homogenisiert. Anschließend werden (5) und 10 min später (6) und (7) bei hoher Schergeschwindigkeit eindispergiert, bis das System seine Endviskosität erreicht hat. Dabei darf die Temperatur der Formulierung 40 °C nicht übersteigen.

| Eigenschaften: | |
|---|---|
| Viskosität bei 20 °C | thixotrop |
| Zugfestigkeit eines Films | 6 N/mm² |
| Bruchdehnung eines Films | 130 % |

Typische Werte eines konventionellen 2K-Spachtelmaterials (z. B. Conipur 203):
thixotrop; 3,5 N/mm², 80 %

### Beispiel B.7:

### Klebstoff

| | | |
|---|---|---|
| (1) | 60,0 % | Polyurethan-Dispersion A. 1 |
| (2) | 0,5 % | Netzmittel (Silicontensid) |
| (3) | 0,5 % | Entlüftungsmittel (Gemisch schaumzerstörender Polysiloxane) |
| (4) | 38,9 % | Füllstoff (Schwerspat) |
| (5) | 0,1 % | Polyurethan-Verdicker |

Die flüssigen Komponenten (1) bis (3) werden vorgelegt und 5 min bei niedriger Schergeschwindigkeit homogenisiert. Anschließend wird (4) zugegeben und 10 min bei hoher Schergeschwindigkeit dispergiert. Nach Zugabe von (5) wird bis zum Erreichen der End-Viskosität dispergiert. Dabei darf die Temperatur der Formulierung 40 °C nicht übersteigen.

| Eigenschaften: | |
|---|---|
| Viskosität bei 20 °C | thixotrop |
| Zugfestigkeit eines Films | 6 N/mm² |
| Bruchdehnung eines Films | 130 % |

### Beispiel B.8:

### Versiegelung für Sportaussenbeläge

| A-Komponente | | |
|---|---|---|
| (1) | 48,7 % | Polyurethan-Dispersion A.2 |
| (2) | 47,8 % | entmineralisiertes Wasser |
| (3) | 0,5 % | Entlüftungsmittel (Gemisch schaumzerstörender Polysiloxane) |
| (4) | 3,0 % | Mattierungsmittel (agglomerierte Fällungskieselsäure) |
| (5) | 0,4 % | Polyurethan-Verdicker |

| B-Komponente | |
|---|---|
| 100% | wasseremulgierbares Isocyanat |

Die Formulierungsbestandteile (1) bis (5) werden vorgelegt und 20 min bei hoher Schergeschwindigkeit dispergiert. Die Nachvernetzungskomponente wird unmittelbar vor der Applikation unter mäßigem Rühren eingemischt (Mischungsverhältnis 100 : 2). Die Verarbeitungszeit des Systems beträgt ca. 40 min bei 20 °C.

| Eigenschaften: | |
|---|---|
| Viskosität bei 20 °C | ca. 60 s (DIN 4 mm Becher) |
| Trocknung | staubtrocken nach ca. 30 Minuten begehbar nach ca. 16 h |

### Beispiel B.9:

### Abmischung aus Polyurethan-Dispersion und Acrylatdispersion in Spachtelmasse

| | | |
|---|---|---|
| (1) | 65 % | Polyurethan-Dispersion A.1 |
| (2) | 19 % | Acrylat/Styrol-Dispersion Fa. BASF Acronal S 321 (ca. 58 %) |
| (3) | 14 % | Füllstoff (Kreide, Glimmer) |
| (4) | 1 % | Pigment (z.B. Eisenoxide) |
| (5) | 0,2 % | Entlüftungsmittel (Siliconbasis) |
| (6) | 0,2 % | Netzmittel |
| (7) | 0,5 % | Dispergieradditiv |
| (8) | 0,1 % | Polyurethan-Verdicker |

| Eigenschaften: | |
|---|---|
| Viskosität bei 20 °C | thixotrop |
| Zugfestigkeit eines Films | 10 N/mm² |
| Bruchdehnung eines Films | 600 % |

### Anwendungsbeispiele C.1 bis C.16

### Beispiel C.1

### Anwendung als Haftvermittler und Bindemittel für Elastikschichten

| 10 mm wasserdurchlässiger EPDM-Granulatbelag | |
|---|---|
| Untergrund: | Asphalt oder Beton |
| 0,2 kg/m² | Haftvermittler auf PU-Dispersionsbasis gemäß Beispiel B.2 |
| 9,5 kg/m² | EPDM-Granulat, 1 bis 4 mm |
| 3,2 kg/m² | Bindemittel auf PU-Dispersionsbasis gemäß Beispiel B.1 |

Nach Abtrocknung des durch Rollen oder Spritzen applizierten Haftvermittlers wird ein Gemisch aus EPDM-Granulat und Bindemittel zu einem Granulatbelag verdichtet.

### Beispiel C.2

### Anwendung als Bindemittel für Gummigranulat-Splitt-Beläge

| 35 mm Basislage unter Kunstrasen | |
|---|---|
| Untergrund: | Asphalt oder Beton, auch unbefestigter Untergrund |
| 29,0 kg/m² | Quarzkies, 3 bis 5 mm oder Splitt, 2 bis 5 mm |
| 11,5 kg/m² | SBR-Granulat-Faser-Gemisch |
| 3,4 kg/m² | Bindemittel auf PU-Dispersionsbasis gemäß Beispiel B.1 |

### Beispiel C.3

### Anwendung als Haftvermittler und Bindemittel für Kombi-Beläge aus Recycling- und EPDM-Granulat

| 15 mm zweischichtiger Kombinationsbelag (9 und 6 mm) | |
|---|---|
| Untergrund: | Asphalt oder Beton |
| 0,2 kg/m² | Haftvermittler auf PU-Dispersionsbasis gemäß Beispiel B.2 |
| 5,9 kg/m² | SBR-Granulat, 1 bis 4 mm |
| 1,9 kg/m² | Bindemittel auf PU-Dispersionsbasis gemäß Beispiel B.1 |
| 6,0 kg/m² | EPDM-Granulat, 1 bis 3 mm |
| 1,9 kg/m² | Bindemittel auf PU-Dispersionsbasis gemäß Beispiel B.1 |

Eine analog Beispiel C.1 hergestellte Elastikschicht aus SBR-Granulat wird mit einer weiteren Schicht aus EPDM-Granulat überbaut.

### Beispiel C.4

### Anwendung als Spritzbeschichtung

| 13 mm wasserdurchlässige Strukturspritzbeschichtung auf Gummigranulatdecke | |
|---|---|
| Untergrund: | Asphalt oder Beton |
| 0,2 kg/m² | Haftvermittler (konventionell), z. B. Conipur 70 |
| 6,9 kg/m² | SBR-Granulat, 1 bis 4 mm |
| 1,5 kg/m² | Polyurethan-Bindemittel (konventionell), z. B. Conipur 322 |
| 1,2 kg/m² | Spritzbeschichtung auf PU-Dispersionsbasis gem. Beispiel B.3 |
| 0,8 kg/m² | EPDM-Granulat, 0,5 bis 1,5 mm |

Auf eine installierte und begehbare Gummigranulatdecke wird in zwei Arbeitsgängen ein Gemisch aus Spritzbeschichtung und EPDM-Granulat kleiner Körnung aufgespritzt.

Zugfestigkeit: 0,55 N/mm²; Bruchdehnung: 45 %

### Beispiel C.5

### Anwendung als Haftvermittler, Bindemittel und Spritzbeschichtung

| 13 mm wasserdurchlässige Strukturspritzbeschichtung auf Gummigranulatdecke | |
|---|---|
| Untergrund: | Asphalt oder Beton |
| 0,2 kg/m² | Haftvermittler auf PU-Dispersionsbasis gemäß Beispiel B.2 |
| 6,9 kg/m² | SBR-Granulat, 1 bis 4 mm |
| 2,3 kg/m² | Bindemittel auf PU-Dispersionsbasis gemäß Beispiel B.1 |
| 1,2 kg/m² | Spritzbeschichtung auf PU-Dispersionsbasis gem. Beispiel B.3 |
| 0,8 kg/m² | EPDM-Granulat, 0,5 bis 1,5 mm |

### Beispiel C.6

### Anwendung als Spritzbeschichtung

| 13 mm wasserundurchlässige Strukturspritzbeschichtung auf Gummigranulatdecke | |
|---|---|
| Untergrund: | Asphalt oder Beton |
| 0,2 kg/m² | Haftvermittler (konventionell), z. B. Conipur 70 |
| 6,9 kg/m² | SBR-Granulat, 1 bis 4 mm |
| 1,5 kg/m² | Polyurethan-Bindemittel (konventionell), z. B. Conipur 322 |
| 1,5 kg/m² | Spachtelmaterial (konventionell), z. B. Conipur 203 |
| 1,2 kg/m² | Spritzbeschichtung auf PU-Dispersionsbasis gem. Beispiel B.4 |
| 0,8 kg/m² | EPDM-Granulat, 0,5 bis 1,5 mm |

Um einen wasserundurchlässigen Sportbodenbelag zu erhalten, werden die Poren einer Gummigranulatdecke vor Applikation der Spritzbeschichtung mit einem Spachtelmaterial geschlossen.

### Beispiel C.7

### Anwendung als Spachtelmaterial und Spritzbeschichtung

| 13 mm wasserundurchlässige Strukturspritzbeschichtung auf Gummigranulatdecke | |
|---|---|
| Untergrund: | Asphalt oder Beton |
| 0,2 kg/m² | Haftvermittler (konventionell), z. B. Conipur 70 |
| 6,9 kg/m² | SBR-Granulat, 1 bis 4 mm |
| 1,5 kg/m² | Polyurethan-Bindemittel (konventionell), z. B. Conipur 322 |
| 1,5 kg/m² | Spachtelmaterial auf PU-Dispersionsbasis gemäß Beispiel B.6 |
| 1,2 kg/m² | Spritzbeschichtung auf PU-Dispersionsbasis gem. Beispiel B.3 |
| 0,8 kg/m² | EPDM-Granulat, 0,5 bis 1,5 mm |

### Beispiel C.8

### Anwendung als Haftvermittler, Bindemittel, Spachtelmaterial und Spritzbeschichtung

| 13 mm wasserundurchlässige Strukturspritzbeschichtung auf Gummigranulatdecke | |
|---|---|
| Untergrund: | Asphalt oder Beton |
| 0,2 kg/m² | Haftvermittler auf PU-Dispersionsbasis gemäß Beispiel B.2 |
| 6,9 kg/m² | SBR-Granulat, 1 bis 4 mm |
| 2,3 kg/m² | Bindemittel auf PU-Dispersionsbasis gemäß Beispiel B.1 |
| 1,5 kg/m² | Spachtelmaterial auf PU-Dispersionsbasis gemäß Beispiel B.6 |
| 1,2 kg/m² | Spritzbeschichtung auf PU-Dispersionsbasis gem. Beispiel B.3 |
| 0,8 kg/m² | EPDM-Granulat, 0,5 bis 1,5 mm |

### Beispiel C.9

### Anwendung als Verlaufsbeschichtung

| 13 mm wasserundurchlässige Verlaufsbeschichtung auf Gummigranulatdecke | |
|---|---|
| Untergrund: | Asphalt oder Beton |
| 0,2 kg/m² | Haftvermittler (konventionell), z. B. Conipur 70 |
| 6,5 kg/m² | SBR-Granulat, 1 bis 4 mm |
| 1,4 kg/m² | Polyurethan-Bindemittel (konventionell), z. B. Conipur 322 |
| 1,5 kg/m² | Spachtelmaterial (konventionell), z. B. Conipur 203 |
| 2,5 kg/m² | Verlaufsbeschichtung auf PU-Dispersionsbasis gem. Beispiel B.5 |
| 2,5 kg/m² | EPDM-Granulat 1 bis 4 mm |

Zur Erreichung eines Porenschlußes wird auf eine installierte und begehbare Gummigranulatdecke ein Spachtelmaterial appliziert. Nach Aushärtung wird eine Verlaufsbeschichtung aufgebracht, die im noch flüssigen Zustand mit EPDM-Granulat im Überschuß abgestreut wird. Die nicht eingebundene Menge an EPDM-Granulat wird nach Durchhärtung der Beschichtung abgekehrt und kann erneut verwendet werden.

### Beispiel C.10

### Anwendung als Spachtelmaterial, Verlaufsbeschichtung und Versiegelung

| 13 mm wasserundurchlässige, versiegelte Verlaufsbeschichtung auf Gummigranulatdecke | |
|---|---|
| Untergrund: | Asphalt oder Beton |
| 0,2 kg/m² | Haftvermittler (konventionell), z. B. Conipur 70 |
| 6,5 kg/m² | SBR-Granulat, 1 bis 4 mm |
| 1,4 kg/m² | Polyurethan-Bindemittel (konventionell), z. B. Conipur 322 |
| 1,5 kg/m² | Spachtelmaterial auf PU-Dispersionsbasis gemäß Beispiel B.6 |
| 2,5 kg/m² | Verlaufsbeschichtung auf PU-Dispersionsbasis gem. Beispiel B.5 |
| 2,5 kg/m² | EPDM-Granulat, 1 bis 4 mm |
| 0,3 kg/m² | Versiegelung auf PU-Dispersionsbasis gemäß Beispiel B.8 |

Ein analog Beispiel C.9 hergestellter Sportbodenbelag wird nach Abkehren des überschüssigen EPDM-Granulats in zwei Spritzgängen versiegelt.

Zugfestigkeit: 0,90 N/mm², Bruchdehnung: 62 %

### Beispiel C.11

### Anwendung als Klebstoff, Spachtelmasse und Verlaufsbeschichtung

| 13 mm wasserundurchlässige Verlaufsbeschichtung auf vorgefertigter Gummigranulatdecke | |
|---|---|
| Untergrund: | Asphalt oder Beton |
| 0,2 kg/m² | Haftvermittler (konventionell), z. B. Conipur 70 |
| 1,0 kg/m² | Klebstoff auf PU-Dispersionsbasis gemäß Beispiel B.7 vorgefertigte Gummigranulatmatte, 10 mm |
| 0,5 kg/m² | Spachtelmaterial auf PU-Dispersionsbasis gemäß Beispiel B.6 |
| 2,5 kg/m² | Verlaufsbeschichtung auf PU-Dispersionsbasis gem. Beispiel B.5 |
| 2,5 kg/m² | EPDM-Granulat, 1 bis 4 mm |

Nach Vorbereitung des Untergrundes mit einem Haftvermittler wird auf diesen eine vorgefertigte Gummigranulatmatte geklebt, mit einem Spachtelmaterial ein Porenschluß vorgenommen und in vorgehend beschriebener Weise die Verlaufsbeschichtung appliziert, die mit EPDM-Granulat abgestreut wird.

### Beispiel C.12

### Anwendung als Verlaufsbeschichtung

| 4 bis 5 mm wasserundurchlässiger, versiegelter Massivbelag | |
|---|---|
| Untergrund: | Asphalt |
| 3 x 2,0 kg/m² | Verlaufsbeschichtung auf PU-Dispersionsbasis gem. Beispiel B.5 |
| 0,3 kg/m² | Polyurethan-Versiegelung (glatt oder rutschfest), z. B. Conipur 63 HE, Conipur 64 HE |

Die Verlaufsbeschichtung wird in drei Arbeitsgängen appliziert und nach vollständiger Durchhärtung in zwei Spritzgängen versiegelt.

### Beispiel C.13

### Anwendung als Spachtelmaterial, Verlaufsbeschichtung und Versiegelung

| 13 mm wasserundurchlässige, versiegelte Verlaufsbeschichtung auf Gummigranulatdecke | |
|---|---|
| Untergrund: | Asphalt |
| 3 x 3,0 kg/m² | Verlaufsbeschichtung auf PU-Dispersionsbasis gem. Beispiel B.5 |
| 3 x 2,5 kg/m² | Füllgranulat, 1 bis 3 mm |
| 3,0 kg/m² | Verlaufsbeschichtung auf PU-Dispersionsbasis gem. Beispiel B.5 |
| 2,5 kg/m² | EPDM-Granulat, 1 bis 4 mm |
| 0,3 kg/m² | Versiegelung auf PU-Dispersionsbasis gemäß Beispiel B.8 |

Die Verlaufsbeschichtung wird in drei Arbeitsgängen appliziert, wobei jede Schicht abgestreut und nach erfolgter Aushärtung abgekehrt wird. Eine vierte Lage Verlaufsbeschichtung wird mit EPDM-Granulat abgestreut, der Überschuß nach Aushärtung aufgenommen und die Oberfläche in zwei Spritzgängen versiegelt.

### Beispiel C.14

### Anwendung als Klebstoff, Spachtelmaterial und Verlaufsbeschichtung in Form einer Dünnbeschichtung

| Untergrund: | Asphalt oder Beton |
|---|---|
| 0,2 kg/m² | Haftvermittler (konventionell), z.B. Conipur 70 |
| 1,0 kg/m² | Klebstoff auf PU-Dispersionsbasis gemäß Beispiel B.7 vorgefertigte Gummigranulatmatte, 10 mm |
| 0,5 kg/m² | Spachtelmaterial auf PU-Dispersionsmasse gemäß Beispiel B.6 (Porenschluss) |
| 0,6 kg/m² | Spachtelmaterial auf PU-Dispersionsmasse gemäß Beispiel B.6 (Aufrakeln; anschliessend Strukturgebung durch Strukturwalze) |
| 150 g/m² | Verlaufsbeschichtung auf PU-Dispersionsbasis gemäß Beispiel B.5 |

### Beispiel C.15

### Anwendung als Spachtelmaterial und Verlaufsbeschichtung in Form einer Dünnbeschichtung

| Untergrund: | Asphalt oder Beton |
|---|---|
| 0,2 kg/m² | Haftvermittler (konventionell), z.B. Conipur 70 |
| 6,5 kg/m² | SBR-Granulat |
| 1,4 kg/m² | Polyurethan-Bindemittel (konventionell), z.B. Conipur 322 |
| 1,5 kg/m² | Spachtelmaterial auf PU-Dispersionsmasse gemäß Beispiel B.6 (Porenschluss) |
| 0,6 kg/m² | Spachtelmaterial auf PU-Dispersionsmasse gemäß Beispiel B.6 (Aufrakeln; anschliessend Strukturgebung durch Strukturwalze) |
| 150 g/m² | Verlaufsbeschichtung auf PU-Dispersionsbasis gemäß Beispiel B.5 |

### Beispiel C.16

### Anwendung als Spachtelmaterial und Spritzbeschichtung

| 13 mm wasserundurchlässige Strukturspritzbeschichtung auf Gummigranulatdecke | |
|---|---|
| Untergrund: | Asphalt oder Beton |
| 0,2 kg/m² | Haftvermittler (konventionell), z. B. Conipur 70 |
| 6,9 kg/m² | SBR-Granulat, 1 bis 4 mm |
| 1,5 kg/m² | Polyurethan-Bindemittel (konventionell), z. B. Conipur 322 |
| 1,5 kg/m² | Spachtelmaterial auf PU- und Acrylat/Styrol-Dispersionsbasis gemäß Beispiel B.9 |
| 1,2 kg/m² | Spritzbeschichtung auf PU-Dispersionsbasis gemäß Beispiel B.3 |
| 0,8 kg/m² | EPDM-Granulat, 0,5 bis 1,5 mm |

## Patentansprüche

1. Verwendung von wäßrigen, isocyanatfreien Polyurethan-Dispersionen mit einem Feststoffgehalt von 40 bis 70 Gew.-% und einem Lösemittelgehalt von ≤ 10 Gew.-% in Formulierungen für Sportbodenbeläge.

2. Verwendung nach Anspruch 1, **dadurch gekennzeichnet, daß** die Polyurethan-Dispersionen einen Lösemittelgehalt von < 5 Gew.-% aufweisen.

3. Verwendung nach den Ansprüchen 1 und 2, **dadurch gekennzeichnet, daß** die Polyurethan-Dispersionen in lösemittelfreier Form vorliegen.

4. Verwendung nach den Ansprüchen 1 bis 3, **dadurch gekennzeichnet, daß** die mittlere Partikelgröße der Micellen der Polyurethan-Polymere 100 bis 500 nm, vorzugsweise 200 bis 400 nm, beträgt.

5. Verwendung nach den Ansprüchen 1 bis 4, **dadurch gekennzeichnet, daß** die Polyurethan-Polymere eine mittlere Molekularmasse von 25 000 bis 100 000 Dalton besitzen.

6. Verwendung nach den Ansprüchen 1 bis 5, **dadurch gekennzeichnet, daß** man die Polyurethan-Dispersionen als Bindemittel für Elastikschichten, bestehend aus Gummigranulaten oder Fasern sowie gegebenenfalls Zuschlagstoffen einsetzt.

7. Verwendung nach den Ansprüchen 1 bis 5, **dadurch gekennzeichnet, daß** die Polyurethan-Dispersionen als Haftvermittler oder Grundierung auf die Untergründe von Sportbodenbelägen aufgebracht werden.

8. Verwendung nach den Ansprüchen 1 bis 5, **dadurch gekennzeichnet, daß** man die Polyurethan-Dispersionen gegebenenfalls mit Struktur-Füllstoffen in Form einer Spritzbeschichtung auf elastische oder starre Untergründe aufbringt.

9. Verwendung nach den Ansprüchen 1 bis 5, **dadurch gekennzeichnet, daß** die Polyurethan-Dispersionen als Verlaufsbeschichtung auf elastische oder starre Untergründe appliziert werden.

10. Verwendung nach den Ansprüchen 1 bis 5, **dadurch gekennzeichnet, daß** die Polyurethan-Dispersionen als Spachtelmassen für den Porenverschluß von Untergründen von Sportbodenbelägen herangezogen werden.

11. Verwendung nach den Ansprüchen 1 bis 5, **dadurch gekennzeichnet, daß** die Polyurethan-Dispersionen als Klebstoff zur Verklebung von vorgefertigten Elastikschichten für Sportbodenbeläge eingesetzt werden.

12. Verwendung nach den Ansprüchen 1 bis 5, **dadurch gekennzeichnet, daß** die Polyurethan-Dispersionen gegebenenfalls in pigmentierter Form für die Versiegelung von Sportbodenbelägen herangezogen werden.

13. Verwendung nach den Ansprüchen 8, 9 und 12, **dadurch gekennzeichnet, daß** die Polyurethan-Dispersionen 0,1 bis 1,0 Gew.-%, bezogen auf die Gesamtmasse der Formulierung, eines UV-Stabilisators auf Basis eines sterisch gehinderten Amins enthalten.

14. Verwendung nach einem der vorhergehenden Ansprüche, **dadurch gekennzeichnet, daß** die formulierten Polyurethan-Dispersionen in Schichten mit einer Gesamtdicke von 0,1 bis 50 mm auf die elastischen oder starren Untergründe aufgebracht werden.

15. Verwendung nach einem der vorhergehenden Ansprüche, **dadurch gekennzeichnet, daß** die formulierten Polyurethan-Dispersionen in einer Menge von 0,1 bis 10,0 kg pro m² der zu beschichtenden Fläche und pro Arbeitsgang eingesetzt werden.

16. Verwendung nach einem der vorhergehenden Ansprüche, **dadurch gekennzeichnet, daß** die formulierten Polyurethan-Dispersionen in einkomponentiger Form zum Einsatz kommen.

## Claims

1. Use of aqueous, isocyanate-free polyurethane dispersions having a solids content of 40 to 70 wt.% and a solvent content of ≤ 10 wt.% in formulations for sports floor coverings.

2. Use according to claim 1, **characterised in that** the polyurethane dispersions have a solvent content of < 5 wt.%.

3. Use according to claims 1 and 2, **characterised in that** the polyurethane dispersions are present in solvent-free form.

4. Use according to claims 1 to 3, **characterised in that** the average particle size of the micelles of the polyurethane polymers is 100 to 500 nm, preferably 200 to 400 nm.

5. Use according to claims 1 to 4, **characterised in that** the polyurethane polymers have an average molecular weight of 25,000 to 100,000 Dalton.

6. Use according to claims 1 to 5, **characterised in that** the polyurethane dispersions are used as binders for elastic layers consisting of rubber granules or fibres as well as optionally additives.

7. Use according to claims 1 to 5, **characterised in that** the polyurethane dispersions are applied as adhesion promoters or primer to the substrates of sports floor coverings.

8. Use according to claims 1 to 5, **characterised in that** the polyurethane dispersions are applied, optionally with structural fillers, in the form of a spray coating to resilient or rigid substrates.

9. Use according to claims 1 to 5, **characterised in that** the polyurethane dispersions are applied as a flow coating to resilient or rigid substrates.

10. Use according to claims 1 to 5, **characterised in that** the polyurethane dispersions are used as surfacers for pore closure of substrates of sports. floor coverings.

11. Use according to claims 1 to 5, **characterised in that** the polyurethane dispersions are used as adhesive for adhering prefabricated elastic layers for sports floor coverings.

12. Use according to claims 1 to 5, **characterised in that** the polyurethane dispersions are used optionally in pigmented form for sealing sports floor coverings.

13. Use according to claims 8, 9 and 12, **characterised in that** the polyurethane dispersions contain 0.1 to 1.0 wt.%, based on the total weight of the formulation, of a UV stabiliser based on a sterically hindered amine.

14. Use according to one of the preceding claims, **characterised in that** the formulated polyurethane dispersions are applied to the resilient or rigid substrates in layers having a total thickness of 0.1 to 50 mm.

15. Use according to one of the preceding claims, **characterised in that** the formulated polyurethane dispersions are used in a quantity of 0.1 to 10.0 kg per m² of the surface area to be coated and per run.

16. Use according to one of the preceding claims, **characterised in that** the formulated polyurethane dispersions are used in single-component form.

## Revendications

1. Utilisation de dispersions aqueuses de polyuréthanne sans isocyanate ayant une teneur en solides de 40 à 70% en poids et une teneur en solvant de ≤ 10% en poids dans des formulations pour revêtements de sols destinés au sport.

2. Utilisation selon la revendication 1, **caractérisée en ce que** les dispersions de polyuréthanne présentent une teneur en solvant de < 5% en poids.

3. Utilisation selon l'une quelconque des revendications 1 ou 2, **caractérisée en ce que** les dispersions de polyuréthanne se trouvent sous une forme sans solvant.

4. Utilisation selon l'une quelconque des revendications 1 à 3, **caractérisée en ce que** la dimension moyenne des particules des micelles des polymères de polyuréthanne est de 100 à 500 nm, avantageusement de 200 à 400 nm.

5. Utilisation selon l'une quelconque des revendications 1 à 4, **caractérisée en ce que** les polymères de polyuréthanne possèdent une masse moléculaire moyenne de 25000 à 100000 Daltons.

6. Utilisation selon l'une quelconque des revendications 1 à 5, **caractérisée en ce que** l'on utilise les dispersions de polyuréthanne en tant que liant pour des couches élastiques, se composant de granulés de caoutchouc ou fibres ainsi que le cas échéant d'additifs.

7. Utilisation selon l'une quelconque des revendications 1 à 5, **caractérisée en ce que** les dispersions de polyuréthanne sont appliquées en tant qu'agent de pontage ou fond à la couche inférieure des revêtements de sols destinés au sport.

8. Utilisation selon l'une quelconque des revendications 1 à 5, **caractérisée en ce que** l'on applique les dispersions de polyuréthanne, le cas échéant, avec des charges de structure sous la forme d'une enduction au pistolet sur des couches inférieures élastiques ou rigides.

9. Utilisation selon l'une quelconque des revendications 1 à 5, **caractérisée en ce que** les dispersions de polyuréthanne sont appliquées en tant que couche de nivellement sur des couches inférieures élastiques ou rigides.

10. Utilisation selon l'une quelconque des revendications 1 à 5, **caractérisée en ce que** les dispersions de polyuréthanne sont utilisées en tant que mastic pour l'obturation des pores de couches inférieures de revêtements de sols destinés au sport.

11. Utilisation selon l'une quelconque des revendications 1 à 5, **caractérisée en ce que** les dispersions de polyuréthanne sont utilisées en tant que colle pour le collage de couches élastiques préfabriquées pour le revêtement de sols destinés au sport.

12. Utilisation selon l'une quelconque des revendications 1 à 5, **caractérisée en ce que** les dispersions de polyuréthanne sont utilisées le cas échéant sous forme pigmentée pour la vitrification de revêtements de sols destinés au sport.

13. Utilisation selon l'une quelconque des revendications 8, 9 ou 12, **caractérisée en ce que** les dispersions de polyuréthanne contiennent 0,1 à 1,0% en poids, en se rapportant à la masse totale de la formulation, d'un agent stabilisant aux UV à base d'une amine à empêchement stérique.

14. Utilisation selon l'une quelconque des revendications précédentes, **caractérisée en ce que** les dispersions formulées de polyuréthanne sont appliquées en couches ayant une épaisseur totale de 0,1 à 50 mm sur la couche inférieure élastique ou rigide.

15. Utilisation selon l'une quelconque des revendications précédentes, **caractérisée en ce que** les dispersions formulées de polyuréthanne sont utilisées en une quantité de 0,1 à 10,0 kg par m² de surface à enduire et par étape de travail.

16. Utilisation selon l'une quelconque des revendications précédentes, **caractérisée en ce que** les dispersions formulées de polyuréthanne sont mises en utilisation en forme à un seul composant.
